# FASCICULE DE BREVET EUROPEEN

(11) **EP 3 752 310 B1**
(45) Date de publication et mention de la délivrance du brevet: **16.03.2022**
(21) Numéro de dépôt: 19718428.6
(22) Date de dépôt: 19.03.2019
(51) Int. Cl.: B22F 10/47, B22F 10/28, B22F 5/00, B22F 5/10, B33Y 80/00, B33Y 30/00, B29C 64/227, B22F 3/24

(54) **OPTIMISATION DES SUPPORTAGES POUR LA FABRICATION ADDITIVE DE PIECE AVEC UN EVIDEMENT**
OPTIMIERUNG DER TRÄGER ZUR GENERATIVEN FERTIGUNG EINES BAUTEILS MIT EINER AUSSPARUNG
OPTIMISATION OF THE SUPPORTS FOR THE ADDITIVE MANUFACTURING OF A COMPONENT WITH A RECESS

(30) Priorité: 23.03.2018 FR 1852558
(43) Date de publication de la demande: 23.12.2020
(73) Titulaire: SAFRAN AIRCRAFT ENGINES, 75015 Paris (FR)
(72) Inventeur: OVAERE, Nicolas, 77550 MOISSY-CRAMAYEL (FR); BUNEL, Jacques, Marcel, Arthur, 77550 MOISSY-CRAMAYEL (FR); GRICOURT, Thomas, 77550 MOISSY-CRAMAYEL (FR); SOMAZZI, Paul, André, 77550 MOISSY-CRAMAYEL (FR); ZAMBELLI, Sylvain, 77550 MOISSY-CRAMAYEL (FR)
(74) Mandataire: Brevalex
(86) Numéro de dépôt international: PCT/FR2019/050611
(87) Numéro de publication internationale: WO 2019/180363

(56) Documents cités:
- EP-A1- 2 719 870
- FR-A1- 3 013 380
- GB-A- 2 541 811
- US-A1- 2017 066 083

## Description

### DOMAINE TECHNIQUE

La présente invention concerne la formation d'un support de palier de moteur d'aéronef par fabrication additive.

### CONTEXTE GENERAL DE L'INVENTION

Un turboréacteur à double flux comporte une manche d'entrée recevant l'air en amont qui est aspiré par un compresseur basse pression, avant d'être divisé en un flux primaire central et un flux secondaire entourant le flux primaire. Après avoir passé le compresseur basse pression, le flux secondaire est propulsé vers l'aval pour générer une poussée en étant soufflé autour du flux primaire, l'amont et l'aval étant définis par rapport au sens d'écoulement de fluide dans le turboréacteur.

Après avoir passé le compresseur basse pression, le flux primaire traverse un compresseur haute pression avant d'atteindre une chambre de combustion. Ce flux primaire est ensuite détendu dans une turbine haute pression liée en rotation avec le compresseur haute pression, puis dans une turbine basse pression liée en rotation au compresseur basse pression, avant d'être expulsé vers l'aval.

Dans le cas d'un turboréacteur double corps, le compresseur haute pression et la turbine haute pression font partie d'un corps haute pression qui entoure un tourillon basse pression en tournant à une vitesse différente de celui-ci, ce tourillon basse pression portant le compresseur basse pression et la turbine basse pression.

Le tourillon basse pression et le corps haute pression sont portés en amont et en aval par des paliers logés dans des enceintes les isolant du reste du moteur. Chaque palier est lubrifié par de l'huile circulant dans l'enceinte qui l'entoure, et qui est délimitée par des éléments fixes et par l'élément rotatif qui la traverse. Un tel palier est porté par un support tout en étant entouré par l'enceinte.

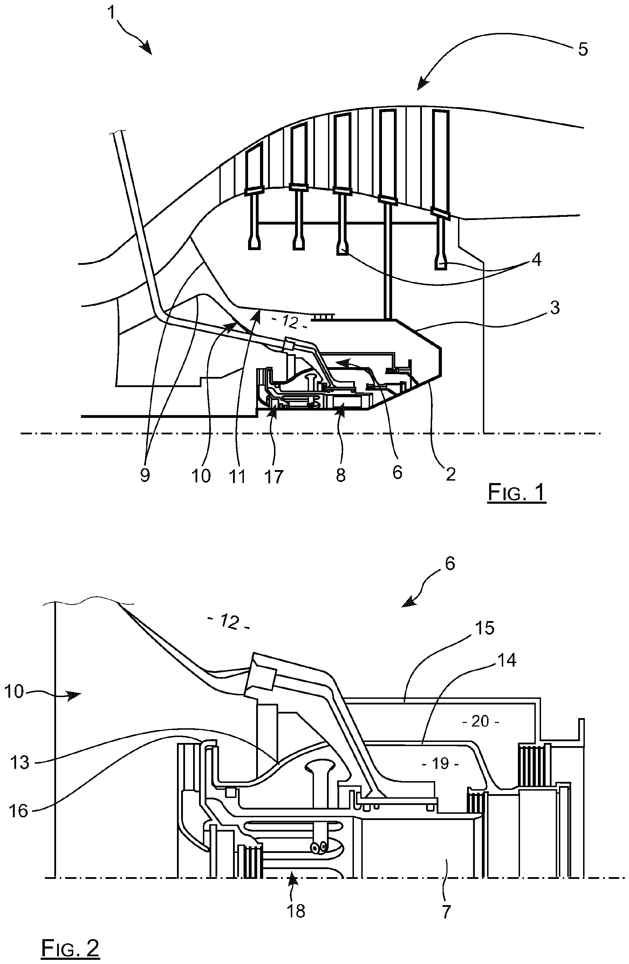

La figure 1, d'une section d'une partie aval d'un turboréacteur 1 selon une possibilité de conception que l'invention se propose d'améliorer, fait apparaître un tourillon basse pression 2, à l'extrémité aval duquel est solidarisée une virole 3 qui s'étend radialement pour être solidarisée à des disques 4 d'une turbine basse pression 5 s'étendant autour d'une portion aval du tourillon 2.

Le tourillon 2 est entouré dans sa région aval par un support de palier 6 qui porte un manchon 7 destiné à recevoir un roulement à rouleaux 8 pour supporter la partie aval du tourillon 2, et qui est solidarisé à un élément fixe 9 du moteur situé à son amont, par l'intermédiaire d'un cône 10. Ce cône 10 s'évase depuis sa portion aval où il est solidarisé au support 6, vers sa portion amont où il est solidarisé à l'élément fixe 9.

Le cône 10 est entouré par un élément cylindrique 11 solidarisé à sa portion amont qu'il prolonge vers l'aval, pour délimiter avec ce cône 10 et avec la virole 3 une portion d'une enceinte 12 renfermant le palier.

Comme visible sur la figure 2 d'une possibilité de conception que l'invention se propose d'améliorer, une jupe 13 et deux organes de révolution 14 et 15 prolongent la région centrale du cône 10 respectivement vers l'amont et vers l'aval, cette jupe et ces organes ayant des diamètres externes de l'ordre du diamètre interne du cône 10. Un support amont 16 comportant une couronne par laquelle il est fixé à l'amont de la jupe 13 porte un joint radial segmenté 17 qui délimite une enceinte 18 en amont du roulement 8. L'élément de révolution 14 délimite conjointement avec le tourillon 2 deux enceintes concentriques 19 et 20 situées en aval du roulement 8.

Compte tenu des contraintes de fabrication et de montage avec des techniques conventionnelles, ces composants, à savoir le support 6, le cône 10, l'élément cylindrique 11 la jupe 13, l'élément 14 et le support amont 16 sont fixés les uns aux autres selon différents procédés incluant notamment le soudage TIG.

D'une manière générale, la conception et la fabrication d'un support de palier sont des opérations complexes et coûteuses impliquant une multiplicité de processus.

Le but de l'invention est d'apporter une solution pour remédier à cet inconvénient.

### EXPOSÉ DE L'INVENTION

A cet effet, l'invention a pour objet un Procédé d'obtention par fabrication additive d'une pièce comportant au moins un évidement, selon les revendications annexées.

Avec cette solution, le volume d'élément alvéolaire est réduit, avec le noyau constituant une plateforme intermédiaire qui empêche la formation d'un élément alvéolaire traversant l'évidement depuis la portion interne inférieure jusqu'à la portion interne supérieure pour la soutenir.

Avec l'agencement du supportage, le procédé selon l'invention permet de fabriquer un évidement de forme complexe, sans que le module inférieur ne soit érigé depuis la portion interne inférieure suivant un contour de rainure d'arc, difficile d'accès pour usinage.

GB 2541811 et US2017066083 divulguent des procédés d'obtention par fabrication additive d'une pièce comportant au moins un évidement.

### BRÈVE DESCRIPTION DES DESSINS

- La figure 1 déjà décrite est une vue schématique en coupe d'une section d'une partie aval d'un turboréacteur ;
- La figure 2 déjà décrite est une vue en coupe d'une portion de section de partie aval d'un turboréacteur;
- La figure 3 est une vue en perspective d'un support de palier fabriqué conformément à l'invention ;
- La figure 4 est une vue en coupe d'une partie de moteur d'aéronef équipée d'un support de palier fabriqué conformément à l'invention ;
- La figure 5 est un une représentation schématique illustrant une problématique d'effondrement lors de la fabrication additive d'une pièce ;
- La figure 6 est une vue en coupe transversale d'un support de palier avec des supportages formés selon l'Etat de la technique.
- La figure 7 est une vue schématique en coupe transversale d'un conduit contenant un supportage formé selon l'Etat de la technique ;
- La figure 8 est une vue schématique de face d'un conduit contenant un supportage formé selon l'Etat de la technique ;
- La figure 9 est une vue en coupe transversale d'une pièce brute avec un conduit contenant un supportage selon l'invention ;
- La figure 10 est une vue de face d'un conduit d'une pièce brute, ce conduit contenant un supportage selon l'invention ;
- La figure 11 est un vue partielle d'une pièce brute et d'un outil pour retirer un supportage selon l'invention.
- La figure 12 est une vue en coupe transversale d'une pièce brute avec un conduit contenant une variante de supportage selon l'invention.

### EXPOSÉ DÉTAILLÉ DE MODES DE RÉALISATION PARTICULIERS

### Support de palier

Selon l'invention, le support de palier est une pièce métallique formée d'un seul tenant par fabrication additive, incluant en particulier un cône de fixation et un élément cylindrique entourant ce cône, au lieu de les fabriquer séparément pour les assembler ensuite.

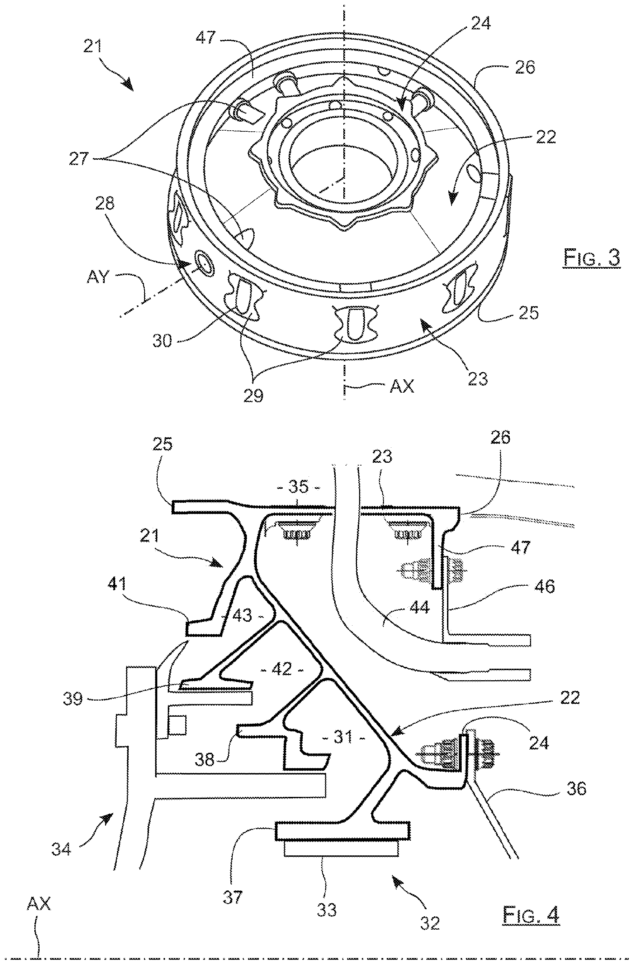

Ce support de palier qui apparaît sur la figure 3 où il est repéré par 21 comporte un tronc de cône ou cône 22, ayant son pourtour de grand diamètre prolongé par un élément généralement cylindrique 23, et ayant son pourtour de petit diamètre prolongé par une couronne 24. Le support de palier 21 a une forme générale de révolution autour d'un axe AX coïncidant avec l'axe longitudinal du moteur dans lequel il est destiné à être monté, le cône 22 et l'élément cylindrique 23 ayant cet axe AX comme axe de révolution.

L'élément cylindrique 23 s'étend depuis un premier bord 25 jusqu'à un second bord 26 circulaires ayant sensiblement les mêmes diamètres tout en étant espacés l'un de l'autre le long de l'axe AX. Le premier bord 25 est le plus proche du pourtour de grand diamètre du cône 22, ce cône présentant un diamètre qui rétrécit en se rapprochant du second bord 26.

Le support de palier 21 comporte en outre quatre conduits 27, dans lesquels circule de l'huile et/ou de l'air, qui traversent le cône 22 radialement par rapport à l'axe AX en s'étendant jusqu'au voisinage de l'élément cylindrique 23. Un orifice 28 est formé dans l'élément cylindrique en vis-à-vis de chaque conduit 27.

Ce support palier inclut également des bossages 29 qui dépassent radialement de l'élément cylindrique 23 vers l'extérieur en étant régulièrement espacés le long de sa circonférence. Chaque bossage 29 comporte une fenêtre centrale c'est-à-dire une ouverture mettant en communication l'intérieur et l'extérieur de l'élément cylindrique 23.

La figure 4 montre une partie de moteur d'aéronef équipée d'un support de palier du type du support 21 délimitant une enceinte principale 31 qui entoure un palier 32 enserrant une bague extérieure de roulement 33. Cette enceinte principale 31 est délimitée par une portion de tourillon 34 d'axe AX, par le support de palier 21 dont l'élément cylindrique 23 est fixé à un élément fixe 35 du moteur, et par une virole 36, fixée à la couronne 24 qui prolonge le support de palier 21 vers l'axe AX.

Une série d'anneaux 37, 38, 39, 41 dépassent du cône 22 vers l'axe AX. Le premier anneau 37 dépasse dans l'enceinte principale 31 pour porter la bague 33. Chaque autre anneau 38, 39 et 41 est jointif avec une portion correspondante du tourillon 34, pour délimiter avec lui deux enceintes annulaires annexes 42 et 43.

Lorsque le support de palier 21 est intégré dans le moteur, il est équipé d'au moins une canalisation 44 qui traverse radialement une fenêtre 30, et se rabat parallèlement à l'axe AX. Cette canalisation 44 est portée par un organe de maintien 46 fixé à un raidisseur 47. Ce raidisseur 47 a une forme de couronne interne, c'est-à-dire dépassant radialement vers l'axe AX sur tout le pourtour de l'élément cylindrique, en étant situé au voisinage du second bord 26. Un tel support de palier comporte typiquement deux canalisation du type de la canalisation 44, espacées l'une de l'autre d'un angle de trente degrés autour de l'axe AX.

### Fabrication additive

La fabrication additive sur lit de poudre désigne l'ajout de matière couche par couche, sur un plateau de fabrication d'une machine dédiée, pour former un objet physique à partir d'un modèle numérique. Dans le cas d'une pièce métallique, on recourt au procédé de fusion/frittage laser qui consiste à faire fondre totalement ou partiellement une fine couche de poudre de matière à l'aide d'un laser à chaque passe.

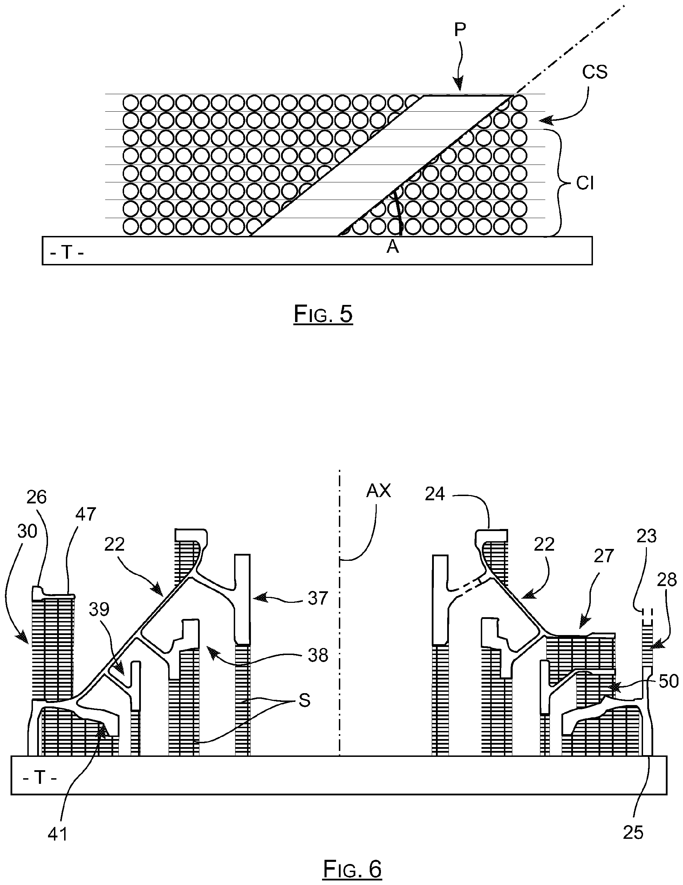

La poudre utilisée en fusion/frittage laser n'est pas autoportante. Comme visible sur la figure 5, lors de la fabrication d'une pièce P, la poudre non fusionnée/frittée de couches inférieures repérées par Cl, c'est-à-dire qui n'est pas balayée par le laser, n'est pas capable de soutenir la poudre fusionnée d'une couche supérieure consécutive CS en deçà d'un angle de dépouille minimum A entre la pièce P et le plateau de fabrication T.

Pour résoudre cette question, on forme tout en fabriquant la pièce, des supportages qui soutiennent chaque région ayant un angle de dépouille inférieur à l'angle minimum A, pour éviter un effondrement local. La pièce et les supportages sont solidaires, fabriqués en même temps et faits du même matériau.

Une fois la fabrication additive achevée, les supportages constituent de la matière non fonctionnelle et ainsi doivent être retirés, par exemple par usinage. A cet effet, ces supportages sont des éléments entièrement alvéolaires, généralement sous la forme de treillis ou issus de l'empilement ordonné de structure dite lattices, consommant moins de poudre tout en étant plus aisément retirable qu'un bloc de matière uniforme.

Durant sa fabrication, le support de palier 21 est orienté de sorte que son axe de révolution AX est normal au plateau T, en débutant par la formation du premier bord 25 de l'élément cylindrique 23. Dans l'exemple des figures, l'angle de dépouille minimum A est défini à 40° par rapport au plateau T, et certaines régions du support de palier 21 présentent un angle de dépouille inférieur à cet angle minimum A, et nécessitent d'être soutenues.

Dans la suite de la description qui va suivre, les termes « inférieur » et « supérieur » sont à considérer par rapport au sens de fabrication du support de palier à partir du plateau de fabrication T. Un élément est dit supérieur par rapport à un autre s'il est plus éloigné du plateau T disque que l'autre, et un élément est dit inférieur par rapport à un autre s'il est moins éloigné du plateau T que l'autre.

### Fabrication du support de palier avec des supportages selon l'Etat de la technique

L'exemple de la figure 6 montre des supportages S pour la fabrication du support de palier 21 qui sont entièrement alvéolaires et agencés selon l'Etat de la technique, et dans lequel chaque anneau 37, 38, 39 et 41 nécessite un supportage érigé depuis le plateau T, puisque les faces à partir desquelles débute leur fabrication sont à distance du plateau T et parallèles à celui-ci, ayant de fait un angle de dépouille de 0°.

Des supportages S sont aussi nécessaires à la formation des conduits 27, des orifices 28 et des fenêtres 30. Par ailleurs, le cône 22 comprend un trou traversant 50 formé sous des conduits 27, ce qui nécessite de soutenir localement l'anneau 39 avec un supportage érigé à partir de l'anneau 41 situé en dessous.

En ce qui concerne la couronne 24 et certaines portions de raidisseur 47 situées au niveau des fenêtres 30 en présentant une section radiale ayant une forme correspondant à celle de la lettre Γ, elles s'étendent normalement à l'axe AX. Cette couronne 24 et ces portions de raidisseur sont ainsi parallèles au plateau T, et nécessitent de fait d'être soutenues par des supportages érigés à partir du support de palier 21, notamment au niveau du cône 22.

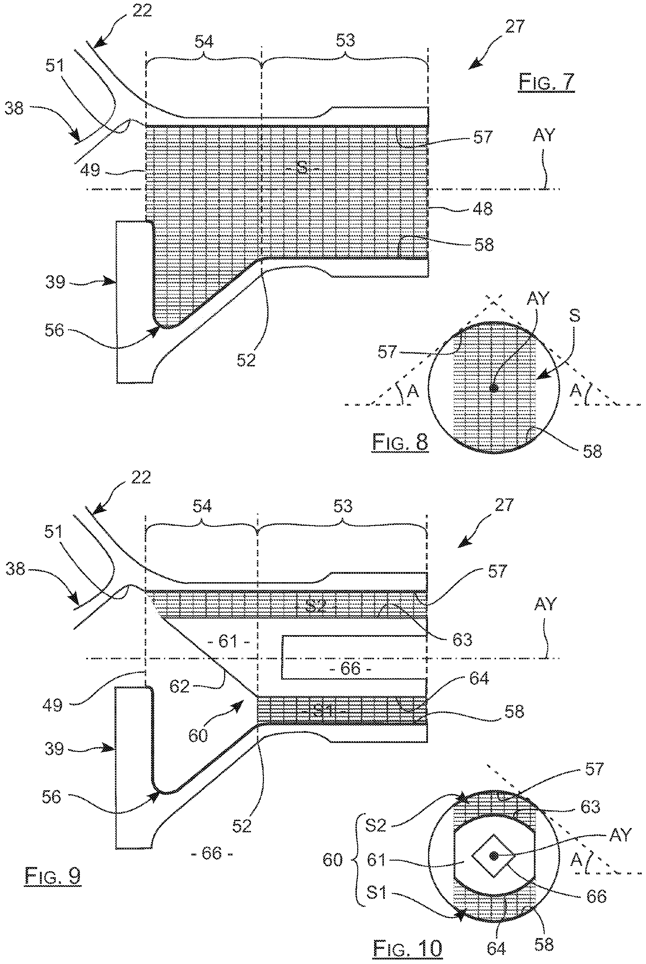

Comme visible plus en détail sur la figure 7, chaque conduit 27 s'étend, suivant une direction notée AY, depuis une première ouverture 48 située à l'extérieur du cône 22 jusqu'à une seconde ouverture 49 qui débouche à l'intérieur de celui-ci. Plus particulièrement, le conduit traverse le cône 22 au voisinage de sa jonction 51 avec l'anneau 38, et au niveau de sa jonction 52 avec l'anneau 39.

Chaque conduit 27 constitue un évidement avec une partie cylindrique 53, s'étendant entre la première ouverture 48 et la jonction 52, et une partie renflée 54, qui prolonge cette partie cylindrique 53 jusqu'à la seconde ouverture 49. La partie renflée 54, c'est-à-dire comportant une portion de plus grande section que la partie cylindrique 53, est délimitée notamment par le contour de l'anneau 39 qui forme à cet emplacement une rainure d'arc 56.

Une portion interne supérieure de conduit 57 qui correspond à une portion de cylindre sur toute l'étendue du conduit 27, concave par rapport au plateau T, comporte des tangentes qui forment avec le plateau T un angle inférieur à l'angle de dépouille minimum A, comme visible sur la figure 8. Le conduit 27 comporte également une portion interne inférieure de conduit 58 qui est située plus proche du plateau T et en vis-à-vis de la portion interne supérieure de conduit 57. Cette portion interne inférieure de conduit 58 correspond à une portion de cylindre dans la partie cylindrique 53, tandis qu'elle suit le contour de la rainure d'arc 56 dans la partie renflée 54.

Comme il ressort des figures 7 et 8, la portion interne supérieure de conduit 57 doit nécessairement reposer sur un supportage S érigé depuis la portion interne inférieure de conduit 58, incluant la rainure d'arc 56.

Le retrait d'un tel supportage S, qui est entièrement alvéolaire et formé dans la rainure d'arc 56, s'avérant difficile compte tenu de l'encombrement, l'idée à la base de l'invention est de proposer une solution alternative à ce supportage S connu des figures 7 et 8 pour le soutien de la portion interne supérieure de conduit 57.

### Fabrication du support de palier conformément au procédé selon l'invention

En référence aux figures 9 et 10, le procédé selon l'invention prévoit d'obtenir une pièce brute, autrement dit le support de palier 21 brut de fabrication en sortie de machine de fusion/frittage laser, dans lequel chaque conduit 27 est équipé d'un supportage 60. Ce supportage 60 comprend un noyau 61 sous la forme d'un bloc de matière, et des modules inférieur et supérieur repérés respectivement par S1 et S2 qui sont des éléments alvéolaires raccordant le noyau 61 au conduit 27.

Ce noyau 61 inclut une portion oblongue de section constante qui s'étend suivant l'axe AY le long de la partie cylindrique 53, comme visible notamment sur la figure 10. Cette portion oblongue est prolongée par une portion en biseau dans la partie renflée 54, en formant une rampe 62 avec un angle de dépouille de 40° avec le plateau T, c'est-à-dire en regard de la portion interne inférieure de conduit 58. Ainsi, le noyau 61 ne nécessite pas d'être soutenu durant la fabrication additive au niveau de la rampe 62 de sorte à s'affranchir d'une étape délicate d'usinage d'élément alvéolaire niché au sein de la rainure d'arc 56.

On distingue une surface supérieure de noyau 63 en vis-à-vis et à distance de la portion interne supérieure de conduit 57, et une surface inférieure de noyau 64 en vis-à-vis et à distance de la portion interne inférieure de conduit 58 au niveau de la partie cylindrique 53, attendu que la rampe 62 prolonge la surface inférieure de noyau 64 dans la partie renflée 54. Le module inférieur S1 relie la portion interne inférieure de conduit 58, qui est située uniquement dans la partie cylindrique 53, à la surface inférieure de noyau 64. Le module supérieur S2 relie quant à lui la surface supérieure de noyau 63 à la portion interne supérieure de conduit 57, avec les modules inférieur et supérieur S1 et S2 distincts l'un de l'autre.

Lors de la fabrication, les supportages 60 sont construits en même temps que le support de palier 21. Le module inférieur S1 est érigé suivant AX depuis la portion interne inférieure de conduit 58 pour fabriquer le noyau 61, puis le module supérieur S2 est quant à lui érigé suivant AX à partir de la surface supérieure de noyau 63 pour soutenir la portion interne supérieure de conduit 57. Autrement dit, le noyau 61 constitue une plateforme intermédiaire évitant la formation de supportage alvéolaire dans la rainure d'arc 56.

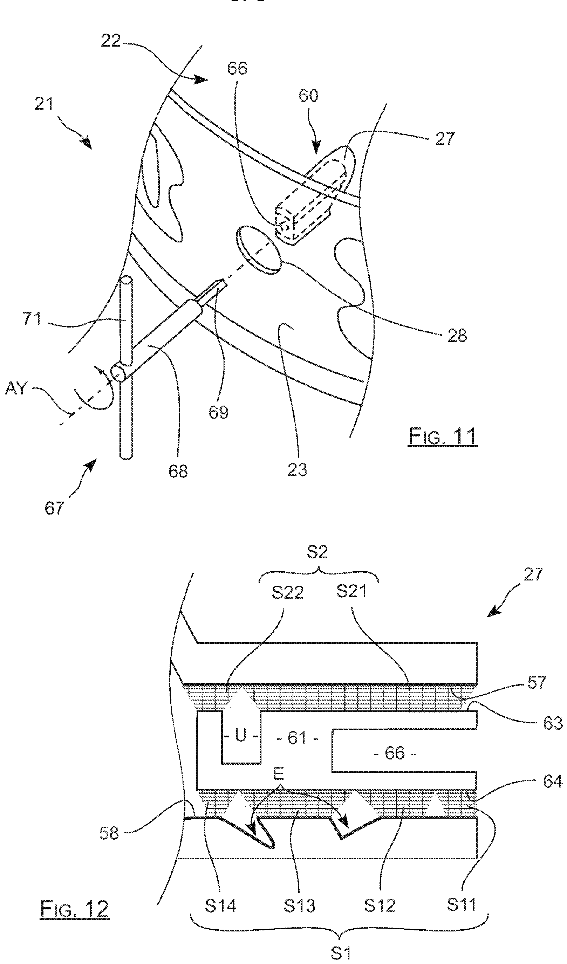

Un trou borgne 66 est formé dans le noyau 61 pour faciliter son extraction hors du conduit 27 depuis l'extérieur du cône 22 avec un outil repéré par 67 sur la figure 11. Ce trou 66 s'étend parallèlement au plateau T suivant la direction AY, et débouche au niveau de la première ouverture 48 du conduit 27, située à l'extérieur du cône 22, et présente une section carrée dont les côtés sont orientés à 45° par rapport au plateau T pour s'affranchir de supportages additionnels. A cet égard, l'invention prévoit avantageusement que le trou 66 s'étende le long d'une portion majoritaire du noyau 61, augmentant la quantité de poudre non fusionnée qui est logée dans ce trou 66 durant la fabrication et qui est apte à être réutilisée ultérieurement. Comme montré sur la figure 11, l'outil 67 comporte une tige 68 ayant une extrémité d'insertion 69 à section carrée qui s'insère dans le trou 66, et une extrémité de préhension traversée par une poigné 71 s'étendant perpendiculairement à cette tige 68.

La désolidarisation du supportage 60 du reste du brut de fabrication, réalisée par un opérateur, consiste tout d'abord à retirer les supportages alvéolaires S fabriqués pour soutenir les orifices 28, par usinage local, afin de libérer l'accès au trou borgne 66. L'opérateur aligne la tige 68 de l'outil 67 suivant la direction AY du conduit 27, insère ensuite l'extrémité d'insertion 69 dans le trou 66 en traversant l'élément cylindrique 23, puis exerce un mouvement de rotation de l'outil autour de la tige 68 grâce à la poigné 71, formant bras de levier, pour extirper le noyau 61. La rotation du noyau 61 autour de la direction AY a pour effet de rompre les modules inférieur et supérieur S1 et S2 par cisaillement et ainsi libérer le noyau 61, le moment de torsion résultant de la rotation du noyau étant dirigé suivant AY, à savoir perpendiculairement à la direction d'étendue suivant AX des modules inférieur et supérieur S1 et S2. Enfin un toilage, autrement dit une abrasion, est réalisé pour retirer des éventuels résidus de modules inférieur et supérieur S1 et S2 qui sont restés attachés au niveau des portions internes supérieure et inférieure de conduit 57 et 58.

L'agencement du supportage 60 permet la fabrication du conduit 27 à géométrie complexe en étant uniquement rattaché à ce conduit aux seules régions formant une portion de cylindre, diminuant ainsi le temps, la difficulté et les coûts d'usinage.

L'invention ne se limite pas au mode de réalisation décrit du noyau 61, et permet l'utilisation de forme diverses dès lors que son extraction est permise et qu'il assure sa fonction de plateforme évitant la formation de support dans une zone dont l'usinage est difficilement praticable.

En outre le noyau 61 peut avoir une forme spécifique qui influence le faciès de rupture des modules inférieur et supérieur S1 et S2 pour qu'ils cassent préférentiellement au niveau de leur interface avec le conduit 27 tout en restant rattachés au noyau, diminuant voire supprimant le temps de toilage. Par exemple, le noyau peut être pourvu de dents qui dépassent des surfaces supérieure et inférieure de noyau 63 et 64 en s'étendant jusqu'au proche voisinage des portions interne supérieure et inférieure de conduit 57 et 58 respectivement.

Le trou 66 peut être formé borgne comme décrit, ou encore traversant. Il peut être aussi prévu un ou plusieurs trous 66 de type fente, triangulaire, hexagonale ou autre selon l'outil que l'on souhaite utiliser, l'invention n'étant pas limitée en ce que le noyau imprime un mouvement de rotation pour casser les modules inférieur et supérieur S1 et S2.

L'utilisation d'un crochet est aussi envisageable pour extraire ce noyau 61 hors du conduit 27, ou encore imprimer des chocs répétés sur celui-ci jusqu'à rupture des modules inférieur et supérieur S1 et S2.

Concrètement, le procédé selon l'invention trouve son application dans le domaine général de la fabrication additive, en proposant une alternative au supportage alvéolaire S de l'Etat de la technique qui est plus simple d'extraction, pour soutenir au moins une portion interne d'un évidement formé dans une pièce.

Dans l'exemple des figures, le conduit 27 constitue un évidement qui s'étend parallèlement au plateau T. Mais le procédé selon l'invention est applicable quelle que soit la morphologie et l'orientation de l'évidement dès lors qu'il existe au moins une portion interne dont les tangentes forment chacune avec le plateau T un angle inférieur à l'angle de dépouille minimum A. La géométrie du noyau peut être ainsi définie en fonction de la morphologie de cet évidement qui n'est pas limité aux formes décrites précédemment. Il est cependant à noter que la valeur de cet angle de dépouille minimum A n'est pas nécessairement égale à 40°, attendu qu'elle dépend de la machine de fabrication additive sur lit de poudre utilisée ainsi que de la nature de la poudre. A cet égard, l'invention pourrait prévoir que la rampe 62 forme un angle avec le plateau T d'une valeur différente pour respecter une nouvelle valeur d'angle de dépouille minimum A.

Dans l'exemple des figures, la rampe 62 du noyau 61 est formée en vis-à-vis de la rainure d'arc 56 pour éviter la formation du module inférieur S1 au sein de cette dernière, mais il est à noter que le noyau peut présenter un autre emplacement de rampe en réponse à une autre morphologie d'évidement. De plus, outre l'intérêt de simplifier l'usinage post-fabrication, il est à noter que l'existence d'une telle rampe 62 permet une consommation réduite de poudre de matière métallique, attendu qu'à cet endroit le noyau 61 ne requiert pas d'être soutenu par la portion interne inférieure 58 via un élément alvéolaire. A cet égard, l'invention pourrait prévoir de former un noyau 61 avec une forme gauche, avec une partie en vis-à-vis de la portion interne inférieure 58 qui ne nécessite pas d'être supportée pendant la fabrication de ce noyau 61 en vue seulement d'économiser de la matière, en conservant par exemple la rampe 62 en absence de rainure d'arc 56. Autrement dit cette partie de noyau, ne nécessitant pas d'être supportée pendant la fabrication, peut être formée sans le besoin exclusif d'éviter la formation du module inférieur S1 dans une zone de singularité qui est difficile d'accès pour l'usinage, et ceci quel que soit la morphologie de l'évidement.

Suivant le même raisonnement, pour limiter davantage la poudre utilisée et/ou éviter l'implantation de supportage au niveau de zones de singularités d'une portion interne inférieure d'évidement, qui sont difficiles d'accès pour l'usinage, l'invention pourrait prévoir que le module inférieur S1 soit formé de différents fragments alvéolaires repérés sur la figure 12 par S11, S12, S13 et S14 à titre non limitatif. Ces fragments alvéolaires, notamment de forme prismatique, sont érigés chacun à partir de zones qui sont au contraire exemptes de singularité, ces singularités étant repérées ici par E. A mesure des couches successives de poudre, ces fragments s'élargissent en respectant l'angle de dépouille minimum A pour se rejoindre et former une surface sans discontinuité d'appui pour la fabrication de tout ou partie de la surface inférieure du noyau 64 qui nécessite d'être soutenue. Autrement dit, un module inférieur S1 qui est érigé localement à différents endroits de la portion interne inférieure 58 ne sort pas du cadre de l'invention. Il est entendu ici que de tel fragment alvéolaires peuvent être formés afin d'économiser de la matière uniquement, autrement dit sans qu'il soit nécessaire d'esquiver une zone difficile d'accès pour l'usinage, tel qu'il en ressort de la figure 12 entre les fragment S11 et S12.

Cet arrangement est applicable également au module supérieur S2 qui peut être érigé localement à partir de différents endroits de la surface supérieure de noyau 63 sous la forme de fragments S21 et S22 à titre non limitatif, tout en formant une surface d'appui sans discontinuité pour la formation satisfaisante de tout ou partie de la portion interne supérieure 57 qui nécessite d'être soutenue.

Enfin, comme visible notamment sur la figure 12 et à titre non limitatif, l'invention pourrait prévoir de limiter encore davantage la poudre utilisée en prévoyant de former le noyau avec une cavité entre deux fragment ici repéré par U entre les fragments S21 et S22. Une telle cavité peut également être prévue dans le noyau entre deux fragments du module inférieur S1 à condition que cette cavité ne nécessite pas d'être supportée. Une telle cavité formée dans le noyau en vis-à-vis de la portion interne inférieure 58 peut par exemple être formée de la jointure de deux rampes s'étendant avec un angle supérieur à l'angle A pour former un contour triangulaire, ou encore présenter un contour d'arc brisé, également appelé contour en tête d'ogive, suivant une vue en coupe transversale de l'évidement.

## Revendications

1. Procédé d'obtention par fabrication additive d'une pièce comportant au moins un évidement (27), incluant :
- une étape de formation d'une pièce brute par fabrication additive en un seul tenant sur un plateau de fabrication (T), durant laquelle :
au moins un évidement comprend une portion interne supérieure (57) qui nécessite d'être soutenue, et une portion interne inférieure (58) en vis-à-vis de cette portion interne supérieure (57), et
un supportage (60) est formé dans ledit au moins un évidemment, ce supportage comportant un noyau (61) pourvu d'un trou (66) et des éléments alvéolaires (S1 ; S2) incluant au moins un module inférieur (S1) qui relie la portion interne inférieure (58) au noyau (61), et un module supérieur (S2) qui relie le noyau (61) à la portion interne supérieure (57) ;
- une étape de désolidarisation du supportage (60) du reste de la pièce brute pour libérer l'évidement (27), comprenant :
un engagement d'une extrémité d'insertion (69) d'un outil (67) dans le trou borgne (66), puis
une rotation par l'outil (67) du noyau (61) autour d'un axe (AY) parallèle au plateau induisant une rupture des modules inférieur et supérieur (S1, S2) pour l'extraction du noyau (61).

2. Procédé selon la revendication 1, dans lequel l'étape de désolidarisation du supportage (60) inclut une étape de finition pour supprimer des résidus de modules inférieur et supérieur (S1, S2) restés attachés à l'évidement (27).

3. Procédé selon la revendication 1 ou 2, dans lequel :
- le module inférieur (S1) est érigé depuis tout ou au moins une partie de la portion interne inférieure (58), tout en formant une surface d'appui pour la formation du noyau à partir d'une surface inférieure de noyau (64) en vis-à-vis de tout ou au moins une partie de cette portion interne inférieure (58), et
- le module supérieur (S2) est érigé depuis tout ou au moins une partie d'une surface supérieure de noyau (63) en vis-à-vis de la portion interne supérieure (57), tout en formant une surface d'appui pour la formation de cette portion interne supérieure (57).

4. Procédé selon l'une des revendications 1 à 3, dans lequel le noyau (61) présente une morphologie gauche, en comprenant au moins une partie en vis-à-vis de la portion interne inférieure (58) qui ne nécessite pas d'être supportée pendant la fabrication du noyau (61).

5. Procédé selon la revendication 4, dans lequel :
- l'évidement est un conduit comprenant une partie cylindrique (53) et une partie renflée (54) qui prolonge la partie cylindrique (53) ; avec
- la portion interne supérieure (57) formant une portion de cylindre le long de la partie cylindrique (53) et de la partie renflée (54) ;
- la portion interne inférieure (58) formant une portion de cylindre le long de la partie cylindrique (53) et suivant un contour en rainure d'arc (56) dans la partie renflée (54) ;
- le noyau comportant une portion de section constante dans la partie cylindrique (53) et une portion en biseau qui prolonge la portion de section constante dans la partie renflée (54) en formant une rampe (62) en regard de la portion interne inférieure (58) suivant un contour en rainure d'arc, cette rampe ne nécessitant pas d'être soutenue durant la fabrication additive.

6. Procédé selon la revendication 5, dans lequel la portion de section constante du noyau (61) située dans la partie cylindrique (53) est oblongue.

7. Procédé selon la revendication 5, dans lequel la transition entre la rampe (62) et la portion de section constante du noyau est marquée par l'interface entre la partie cylindrique (53) et la partie renflée (54) de l'évidement.

8. Procédé selon la revendication 1, dans lequel le trou borgne (66) comporte une section carrée dont les côtés sont orientés à 45° par rapport au plateau de fabrication (T).

9. Procédé selon l'une des revendications précédentes, dans lequel la pièce est un support de palier (21).

## Patentansprüche

1. Verfahren zur Herstellung eines Bauteils, das mindestens eine Aussparung (27) umfasst, durch additive Fertigung, umfassend:
- einen Schritt des Formens eines Rohlings durch additive Fertigung in einem Stück auf einer Fertigungsplatte (T), wobei:
mindestens eine Aussparung einen oberen Innenabschnitt (57), der getragen werden muss, und einen unteren Innenabschnitt (58), der zu dem oberen Innenabschnitt (57) zeigt, umfasst, und
ein Träger (60) in der mindestens einen Aussparung ausgebildet ist,
wobei der Träger einen mit einem Loch (66) versehenen Kern (61) und wabenförmige Elemente (S1; S2) umfasst, die mindestens ein unteres Modul (S1), das den unteren Innenabschnitt (58) mit dem Kern (61) verbindet, und ein oberes Modul (S2), das den Kern (61) mit dem oberen Innenabschnitt (57) verbindet, enthalten;
- einen Schritt des Trennens des Trägers (60) vom Rest des Rohlings zum Freilegen der Aussparung (27), umfassend:
ein Eingreifen eines Einführungsendes (69) eines Werkzeugs (67) in das Blindloch (66), dann
eine Drehung des Kerns (61) durch das Werkzeug (67) um eine zur Platte parallele Achse (AY), die einen Bruch des unteren und des oberen Moduls (S1, S2) für das Herausziehen des Kerns (61) verursacht.

2. Verfahren nach Anspruch 1, wobei der Schritt des Trennens des Trägers (60) einen Endbearbeitungsschritt zum Entfernen von Resten des unteren und oberen Moduls (S1, S2), die an der Aussparung (27) haften bleiben, umfasst.

3. Verfahren nach Anspruch 1 oder 2, wobei:
- das untere Modul (S1) aus dem gesamten oder zumindest einem Teil des unteren Innenabschnitts (58) errichtet wird, wobei eine Auflagefläche für die Bildung des Kerns aus einer unteren Fläche des Kerns (64), die zu dem gesamten oder zumindest einem Teil des unteren Innenabschnitts (58) zeigt, gebildet wird, und
- das obere Modul (S2) aus dem gesamten oder zumindest einem Teil einer oberen Fläche des Kerns (63), die zu dem oberen Innenabschnitt (57) zeigt, errichtet wird, wobei eine Auflagefläche für die Bildung des oberen Innenabschnitts (57) gebildet wird.

4. Verfahren nach einem der Ansprüche 1 bis 3, wobei der Kern (61) eine linke Morphologie hat, die mindestens einen Teil gegenüber dem unteren Innenabschnitt (58) umfasst, der während der Herstellung des Kerns (61) nicht gestützt werden muss.

5. Verfahren nach Anspruch 4, wobei:
- die Aussparung eine Leitung ist, die einen zylindrischen Teil (53) und einen verdickten Teil (54) umfasst, der den zylindrischen Teil (53) verlängert; mit
- der obere Innenabschnitt (57) einen Zylinderabschnitt entlang des zylindrischen Teils (53) und des verdickten Teils (54) bildet;
- der untere Innenabschnitt (58) einen Zylinderabschnitt entlang des zylindrischen Teils (53) bildet und einer Kontur in Form einer Bogennut (56) in dem verdickten Teil (54) folgt;
- wobei der Kern einen konstanten Querschnittsabschnitt im zylindrischen Teil (53) und einen abgeschrägten Abschnitt umfasst, der den konstanten Querschnittsabschnitt im gewölbten Teil (54) verlängert, indem er hinsichtlich des unteren Innenabschnitts (58) eine Rampe (62) bildet, die einer Kontur in Form einer Bogennut folgt, wobei die Rampe während der additiven Fertigung nicht gestützt werden muss.

6. Verfahren nach Anspruch 5, wobei der konstante Querschnittsabschnitt des Kerns (61), der sich in dem zylindrischen Teil (53) befindet, länglich ist.

7. Verfahren nach Anspruch 5, wobei der Übergang zwischen der Rampe (62) und dem konstanten Querschnittsabschnitt des Kerns durch die Grenzfläche zwischen dem zylindrischen Teil (53) und dem gewölbten Teil (54) der Aussparung gekennzeichnet ist.

8. Verfahren nach Anspruch 1, wobei das Blindloch (66) einen quadratischen Querschnitt aufweist, dessen Seiten unter 45° in Bezug auf die Fertigungsplatte (T) orientiert sind.

9. Verfahren nach einem der vorhergehenden Ansprüche, wobei das Bauteil ein Lagerträger (21) ist.

## Claims

1. Method for obtaining, by additive manufacturing, a component including at least one recess (27), including:
- a step of forming a one-piece blank component by additive manufacturing on a build plate (T), during which:
at least one recess comprises an upper inner portion (57) that needs to be supported, and a lower inner portion (58) opposite this upper inner portion (57), and
a support (60) is formed in said at least one recess, this support including a core (61) provided with a hole (66) and cellular elements (S1; S2) including at least one lower module (S1) that connects the lower inner portion (58) to the core (61), and an upper module (S2) that connects the core (61) to the upper inner portion (57);
- a step of detaching the support (60) from the rest of the blank component in order to expose the recess (27), comprising:
an engagement of an insertion end (69) of a tool (67) in the hole (66), then
a rotation by the tool (67) of the core (61) around an axis (AY) parallel to the build plate (T) inducing a rupture of the lower and upper modules (S1, S2) for the extraction of the core (61).

2. Method according to claim 1, wherein the step of detaching the support (60) includes a finishing step to suppress residues from lower and upper modules (S1, S2) remained attached to the recess (27).

3. Method according to claim 1 or 2, wherein:
- the lower module (S1) is erected from all or at least one portion of the lower inner portion (58), while forming a bearing surface for the formation of the core from a lower surface of core (64) opposite all or at least one portion of this lower inner portion (58), and
- the upper module (S2) is erected from all or at least one portion of an upper surface of core (63) opposite the upper inner portion (57), while forming a bearing surface for the formation of this upper inner portion (57).

4. Method according to one of claims 1 to 3, wherein the core (61) has free form surfaces, while comprising at least one portion opposite the lower inner portion (58) that does not require being supported during the manufacture of the core (61).

5. Method according to claim 4, wherein:
- the recess is a duct comprising a cylindrical portion (53) and a bulging portion (54) that extends the cylindrical portion (53); with
- the upper inner portion (57) forming a cylinder portion along the cylindrical portion (53) and the bulging portion (54);
- the lower inner portion (58) forming a cylinder portion along the cylindrical portion (53) and following a contour as an arched groove (56) in the bulging portion (54);
- the core including a portion of constant section in the cylindrical portion (53) and a bevelled portion that extends the portion of constant section in the bulging portion (54) by forming a ramp (62) facing the lower inner portion (58) following a contour as an arched groove, this ramp not needing to be supported during the additive manufacturing.

6. Method according to claim 5, wherein the portion of constant section of the core (61) located in the cylindrical portion (53) is oblong.

7. Method according to claim 5, wherein the transition between the ramp (62) and the portion of constant section of the core is marked by the interface between the cylindrical portion (53) and the bulging portion (54) of the recess.

8. Method according to claim 1, wherein the hole (66) includes a square section of which the sides are oriented at 45° with respect to the build plate (T).

9. Method according to one of the preceding claims, wherein the component is a bearing support (21).
